# FASCICULE DE BREVET EUROPEEN

(11) **EP 3 002 306 B1**
(45) Date de publication et mention de la délivrance du brevet: **01.05.2019**
(21) Numéro de dépôt: 15194316.4
(22) Date de dépôt: 21.10.2013
(51) Int. Cl.: C08G 69/26, C08J 5/04, C08J 5/24, C08L 77/06, C08G 69/48, C08K 7/04, B29C 70/02

(54) **MATERIAU COMPOSITE THERMOPLASTIQUE A BASE DE POLYAMIDE SEMI-CRISTALLIN ET PROCEDE DE FABRICATION**
THERMOPLASTISCHES VERBUNDMATERIAL AUF DER BASIS VON HALBKRISTALLINEM POLYAMID, UND HERSTELLUNGSVERFAHREN
SEMI-CRYSTALLINE POLYAMIDE THERMOPLASTIC COMPOSITE MATERIAL AND METHOD FOR MANUFACTURING SAME

(30) Priorité: 23.10.2012 FR 1260058
(43) Date de publication de la demande: 06.04.2016
(62) Demande divisionnaire de: 13789868.0
(73) Titulaire: ARKEMA FRANCE, 92700 Colombes (FR)
(72) Inventeur: BRIFFAUD, Thierry, 27300 Bernay (FR); HOCHSTETTER, Gilles, 94240 L'Hay Les Roses (FR)

(56) Documents cités:
- EP-A1- 1 710 482
- EP-A1- 1 741 553
- EP-A1- 2 028 231
- EP-A1- 2 410 020
- EP-A1- 2 746 315
- EP-A2- 0 490 155
- WO-A1-95/35343
- WO-A1-03/014198
- WO-A1-2008/155318
- WO-A1-2012/053699
- JP-A- 2006 274 061

## Description

L'invention concerne un procédé de fabrication d'une pièce mécanique à base d'un matériau composite thermoplastique obtenu à partir d'une composition de ou pour un matériau composite thermoplastique avec une matrice en polyamide (PA) semi-cristallin de température de transition vitreuse Tg d'au moins 90°C et de température de fusion Tf inférieure ou égale à 280°C et couvre également un procédé de fabrication dudit matériau composite en particulier des pièces mécaniques ou de structure à base dudit matériau, l'utilisation de la composition de l'invention pour des pièces de matériau composite ainsi que la pièce composite qui en résulte et pour des applications dans les domaines de : l'automobile, ferroviaire, marin, transport routier, de l'éolien, du sport, aéronautique et spatial, du bâtiment, des panneaux et des loisirs.

EP 0261 020 décrit l'utilisation de prépolymères semi-cristallins réactifs à base de PA 6, 11 et 12 pour la fabrication d'un composite thermoplastique par un procédé de pultrusion. Les prépolymères de structure aliphatique tels que décrits présentent des Tg faibles et des performances mécaniques insuffisantes à chaud.

EP 550 314 décrit, parmi ses exemples, des compositions (non réactives) de copolyamide en cherchant des températures de fusion supérieures à 250°C et des Tg limitées avec la plupart des exemples cités ayant une Tg trop basse (< 80°C) ou une Tf trop élevée (> 300°C).

EP 1 988 113 décrit une composition de moulage à base d'un copolyamide 10T/6T avec :
- 40 à 95% mol de 10T
- 5 à 40% de 6T.

Sont visés en particulier des polyamides de température de fusion élevée et supérieure à 270°C. Les exemples mentionnés et la figure 1 nous enseignent que la température de fusion de ces compositions est d'au moins environ 280°C.

WO 2011/003973 décrit des compositions comprenant de 50 à 95 mol% d'un motif à base d'une diamine aliphatique linéaire comportant de 9 à 12 atomes de carbone et d'acide téréphtalique et de 5 à 50% de motif associant l'acide téréphtalique à un mélange de 2,2,4 et 2,4,4 triméthylhexanediamine.

US 2011306718 décrit un procédé de pultrusion de polyamides aliphatiques réactives de faible Tg associés à des allongeurs de chaînes de structure polymérique portant plusieurs (et bien supérieur à 2) fonctions d'anhydrides ou d'époxydes. Ce document ne décrit aucun allongeur non polymérique.

Les inconvénients de l'état de l'art, avec l'absence d'un bon compromis entre les performances mécaniques et l'aptitude de mise en oeuvre (facilité de transformation) à plus basse température avec un temps de cycle de production plus court sont surmontés par la solution de la présente invention qui vise des compositions de PA semi-cristallin, permettant une mise en oeuvre plus facile à des températures plus basses avec une économie sur le bilan global énergétique du procédé de mise en oeuvre, un temps de cycle de production plus court et une productivité améliorée, par une aptitude à la cristallisation rapide dudit polymère polyamide et tout en maintenant à un niveau élevé les performances mécaniques desdits matériaux finaux. Plus particulièrement, dans le cas des compositions réactives, on cherche à avoir une cinétique de réaction plus rapide tout en ayant une vitesse et/ou une température de cristallisation du polymère formé également plus élevée.

Le choix d'un polymère polyamide semi-cristallin, comme matrice du matériau composite de l'invention, a comme intérêt par rapport aux polyamides amorphes, des performances mécaniques significativement améliorées notamment à chaud, telles que la résistance au fluage ou à la fatigue. En outre, présenter un point de fusion au-delà de 200°C a pour avantage dans l'automobile d'être compatible avec les traitements par cataphorèse, ce que ne permet pas une structure de type PA amorphe. Comme pour les amorphes, on recherche une Tg supérieure ou égale à 90°C pour assurer de bonnes propriétés mécaniques au composite sur toute la plage de température d'utilisation par exemple jusqu'à 90°C pour l'éolien, jusqu'à 100°C pour l'automobile et jusqu'à 120°C pour l'aéronautique. Par contre, un point de fusion trop élevé, en particulier supérieur à 280°C, est en revanche néfaste car il nécessite la mise en oeuvre du composite à des températures plus élevées avec des contraintes de matériel de moulage à utiliser (et système de chauffe associé) et une surconsommation énergétique avec en plus des risques de dégradation thermique par chauffage à des températures plus élevées que la température de fusion dudit polyamide, avec comme conséquence l'affectation des propriétés de la matrice thermoplastique finale et du composite qui en résulte. La cristallinité dudit polymère doit être la plus élevée possible mais avec une température de fusion Tf pas trop élevée (Tf ≤ 280°C et plus particulièrement ≤ 270°C) pour optimiser les performances mécaniques et la vitesse de cristallisation et/ou la température de cristallisation la plus élevée possible, ceci pour réduire le temps de moulage avant éjection de la pièce composite moulée avec un choix sélectif de la composition dudit polyamide semi-cristallin. Donc, l'objet de la présente invention est la mise en oeuvre de nouvelles compositions spécifiques de composite thermoplastique, en particulier à base de polyamide semi-cristallin, présentant un bon compromis entre des performances mécaniques élevées (tenue mécanique) en particulier à chaud et une mise en oeuvre facile. Cela signifie qu'il y a comme objectif des compositions faciles à mettre en oeuvre avec des températures de transformation et de mise en oeuvre plus basses que celles pour d'autres compositions de l'état de l'art, avec un bilan énergétique global de mise en oeuvre plus favorable, un temps de cycle plus court et une productivité plus élevée. Plus particulièrement, la solution de l'invention, dans le cas de compositions réactives, permet en utilisant des compositions à base de prépolymères polyamides réactifs semi-cristallins, à la fois une cinétique de réaction et une cinétique de cristallisation rapide avec un temps de cycle plus court. Plus particulièrement, la matrice polymère polyamide tout en ayant une Tg élevée et une Tf limitée comme définies, avec une mise en oeuvre facile dudit composite, doit avoir également une vitesse de cristallisation élevée, caractérisée d'abord par un écart entre température de fusion et de cristallisation Tf-Tc ne dépassant pas 50°C, de préférence ne dépassant pas 40°C et plus particulièrement ne dépassant pas 30°C. Plus préférentiellement, cet écart Tf-Tc ne dépasse pas 30°C, sauf si Tf-Tg est < 150°C, auquel cas (Tf-Tg < 150°C) l'écart Tf-Tc peut varier jusqu'à 50°C. Les performances mécaniques ou tenue mécanique à chaud du composite peuvent être évaluées par la variation du module mécanique entre la température ambiante (23°C) et 100°C avec un maintien d'au moins à 75% des performances mécaniques, en termes de module, par rapport à celles à l'ambiante (23°C). Donc, l'objet de l'invention est de mettre au point une composition de polyamide répondant à ces besoins.

Donc, le premier objet de l'invention concerne un procédé spécifique de fabrication d'un matériau composite thermoplastique et plus particulièrement de fabrication de pièces mécaniques ou des pièces de structure à base dudit matériau composite, obtenu à partir d'une composition spécifique de polyamide (PA) semi-cristallin pour un matériau composite thermoplastique ou une composition de matériau composite thermoplastique, avec une matrice thermoplastique ayant une Tg d'au moins 90°C et une Tf inférieure ou égale à 280°C de préférence inférieure à 280°C. Cette composition peut être réactive par l'intermédiaire de prépolymères réactifs entre eux par condensation ou avec un allongeur de chaîne par polyaddition et sans élimination de sous produits volatils. Ladite composition spécifique est basée sur le choix sélectif d'au moins deux motifs d'amide A et B différents et à des proportions molaires spécifiques avec présence optionnelle d'au moins un troisième (C) et éventuellement d'un quatrième (D) motif amide, ces motifs étant différents les uns par rapport aux autres.

Est concerné également par la présente invention le polymère thermoplastique de la matrice thermoplastique dudit matériau composite.

Un autre objet de l'invention concerne le matériau composite thermoplastique qui résulte de ladite composition pour matériau composite.

Finalement, l'invention couvre une pièce mécanique ou pièce de structure à base de matériau composite obtenu par le procédé spécifique de l'invention ou qui résulte de l'utilisation de la composition spécifique de PA de l'invention.

Donc, le premier objet concerne un procédé de fabrication d'une pièce mécanique à base d'un matériau composite thermoplastique, caractérisé en ce que ledit matériau composite thermoplastique est obtenu à partir d'une composition pour matériau composite thermoplastique ou une composition de matériau composite thermoplastique, ledit matériau composite comprenant des fibres de renfort ou autrement dit un renfort fibreux et une matrice thermoplastique imprégnant lesdites fibres (ou ledit renfort fibreux), ladite matrice étant à base d'au moins un polymère thermoplastique, avec, en ce qui concerne ladite composition :
- ledit polymère thermoplastique de matrice étant un polymère polyamide semi-cristallin avec une température de transition vitreuse Tg d'au moins 90°C, de préférence d'au moins 100°C, plus préférentiellement d'au moins 110°C, encore plus préférentiellement 120°C, une température de fusion Tf inférieure ou égale à 280°C, en particulier inférieure à 280°C, de préférence inférieure ou égale à 270°C, en particulier allant de 220 à 270°C
- ladite composition comprenant en plus desdites fibres de renfort :
   a) une composition réactive comprenant ou constituée de, au moins un prépolymère (ou oligomère, avec oligomère et prépolymère signifiant la même chose pour la suite) polyamide réactif, ladite composition étant une composition précurseur dudit polymère polyamide de ladite matrice,
et avec :
- ladite composition a) comprenant ou étant constituée de un ou plusieurs polyamides, y compris copolyamides statistiques ou séquencés qui sont des prépolymères (ou oligomères) selon a) et lesquels comprennent des motifs amides A et B différents et en option, des motifs amides C et D différents, sélectionnés comme suit :
- A : est un motif amide majoritaire présent à un taux molaire allant de 55 à 95%, de préférence de 55 à 85%, plus préférentiellement de 55 à 80%, encore plus préférentiellement de 55 à 75%, en particulier de 55 à 70%, choisi parmi les motifs x.T, où x est une diamine aliphatique linéaire en Cg à C₁₈, de préférence en Cg, C₁₀, C₁₁, C₁₂ et où T est l'acide téréphtalique,
- B : est un motif amide différent de A, lequel motif B est présent à un taux molaire allant de 5 à 45%, de préférence de 15 à 45%, plus préférentiellement de 20 à 45%, encore plus préférentiellement de 25 à 45%, en particulier de 30 à 45%, en fonction de la Tf du polyamide à base de motif A et avec ledit motif amide B étant choisi parmi les motifs x'.T, où x' est choisi parmi :
   ∘ B1) une diamine aliphatique ramifiée portant une seule ramification (branchement signifiant la même chose) méthyle ou éthyle, de préférence méthyle, en particulier la 2-méthyl pentaméthylène diamine (MPMD) ou la 2-méthyl octaméthylène diamine (MOMD) et ayant une longueur de chaîne principale différente d'au moins deux atomes de carbone par rapport à la longueur de chaîne principale de la diamine x dudit motif A associé, de préférence x' (selon B1)) étant la MPMD ou
   ∘ B2) la m-xylylène diamine (MXD) ou
   ∘ B3) une diamine aliphatique linéaire en C₄ à C₁₈ quand dans ledit motif A, ladite diamine x est une diamine aliphatique linéaire en C₁₁ à C₁₈ et x' est une diamine en Cg à C₁₈ quand dans ledit motif A, ladite diamine x est une diamine en Cg ou C₁₀, de préférence avec une différence d'au moins deux atomes de carbone entre la chaîne de diamine x dudit motif A et la chaîne de diamine x' dudit motif B,
   et de préférence, ledit motif B est choisi parmi les motifs x'.T, où x' est la MPMD selon option B1) ou la MXD selon option B2) ou une diamine aliphatique linéaire comme définie ci-haut selon option B3) ou plus préférentiellement x' est la MPMD selon B1) ou la MXD selon B2) et encore plus préférentiellement x' est la MXD selon B2)
- C : motif amide optionnel différent de A et de B et choisi parmi les motifs amides à base de (signifiant comprenant) une structure cycloaliphatique et/ou aromatique ou à base de x'T tel que défini ci-haut pour B mais avec x' différent de x' pour le motif B
- D : motif amide optionnel différent de A, de B et de C, quand C est présent et choisi parmi les motifs amides aliphatiques issus de :
   ∘ aminoacides ou lactames en C₆ à C₁₂, de préférence C₆, C₁₁ et C₁₂ ou leurs mélanges, ou
   ∘ la réaction d'un diacide aliphatique linéaire en C₆ à C₁₈, de préférence en C₆ à C₁₂ et d'une diamine aliphatique linéaire en C₆ à C₁₈, de préférence en C₆ à C₁₂ ou de leurs mélanges,
   et sous la condition que la somme des taux molaires A + B + C + D soit égale à 100%.

La somme des taux molaires en l'absence de C et D se réduit à A + B = 100%, avec A et B étant complémentaires à 100%. Si C est présent sans D, dans ce cas cette somme se réduit à A + B + C = 100%. Si seul D est présent sans C, ladite somme de 100% correspond à A + B + D.

Ladite composition est plus particulièrement une composition pour matériau composite thermoplastique. Cela signifie qu'elle permet l'obtention d'un matériau composite thermoplastique.

Selon une première possibilité dans ladite composition de l'invention, ledit polyamide, qu'il soit polymère ou prépolymère, comprend ledit motif amide selon C, différent de A et de B ou le motif C comme défini ci-haut est présent et en remplacement partiel de B et à un taux molaire allant jusqu'à 25%, de préférence jusqu'à 20%, plus préférentiellement jusqu'à 15% par rapport audit motif B.

Quand le motif C est présent et qu'il correspond à x'T avec x' comme défini ci-haut pour le motif B, dans ce cas C étant différent de B par définition, ledit motif C peut être à base x' étant défini selon B1 et dans ce cas ledit motif B peut avoir x' défini selon soit B2 soit B3. Si C est à base de x' selon B2, dans ce cas le motif B peut être à base de x' étant selon B1 ou B3. Si C est à base de x' selon B3, dans ce cas le motif B peut être à base de x' étant défini selon B1 ou B2.

Plus particulièrement, dans ce motif C de ladite composition, ladite structure aromatique peut être choisie par exemple parmi la structure isophtalique et/ou naphtalènique. Une structure téréphtalique est possible en particulier pour le composant diacide quand la diamine est cycloaliphatique. Ladite structure cycloaliphatique peut être choisie parmi une structure à base de cycle cyclohexane ou une structure à base de cycle décahydronaphtalénique (structure naphtalénique hydrogénée).

De préférence, la structure de C est dérivée d'une diamine aliphatique et d'un diacide cycloaliphatique et/ou aromatique, par exemple comme définis ci-dessus ou d'un diacide et d'une diamine cycloaliphatique, par exemple comme définis ci-dessus. Plus particulièrement, ledit motif C est choisi parmi les motifs issus :
- d'une diamine cycloaliphatique et d'acide téréphtalique ou
- de diacide choisi parmi isophtalique, naphténique ou à base de cyclohexane et de diamine x ou x' comme définies ci-haut pour les motifs A et B respectivement.

Selon une autre variante de la composition de l'invention, ledit motif D est présent et en remplacement partiel de B à un taux molaire pouvant aller jusqu'à 70%, de préférence jusqu'à 15% par rapport audit motif B. Donc, selon cette variante, ladite composition comprend ledit motif D comme défini ci-haut, en particulier choisi parmi : les aminoacides ou lactames en C₆ à C₁₂, de préférence en C₆, C₁₁ et C₁₂ ou leurs mélanges ou les motifs issus de la réaction d'un diacide aliphatique linéaire en C₆ à C₁₈, de préférence C₆ à C₁₂ et d'une diamine aliphatique linéaire en C₆ à C₁₈, de préférence C₆ à C₁₂ et de préférence avec les motifs A et B étant respectivement à base des diamines x et x' comme définies ci-haut.

De préférence, le motif C et/ou D, quand il est présent, remplace partiellement le motif B avec un taux molaire (C + D) jusqu'à 70% et de préférence inférieur à 40% par rapport au taux molaire dudit motif B comme défini selon l'invention. Donc, une partie du motif B tel que défini selon l'invention qui représente moins de 50%, de préférence moins de 40% en mol par rapport à B, peut être remplacée par un motif C et/ou D comme définis ci-dessus selon l'invention.

Plus particulièrement, la différence Tf-Tc, entre la température de fusion Tf et la température de cristallisation Tc dudit polymère (polyamide) matrice, ne dépasse pas 50°C, de préférence ne dépasse pas 40°C et plus particulièrement ne dépasse pas 30°C.

En particulier, Tf-Tc ne dépasse pas 30°C sauf si Tf-Tg est inférieur à 150°C, auquel cas Tf-Tc peut aller jusqu'à 50°C.

Selon une option particulière, l'enthalpie de cristallisation dudit polymère de matrice, mesurée en Calorimétrie Différentielle à Balayage (DSC) selon la Norme ISO 11357-3, est supérieure à 40 J/g, de préférence supérieure à 45 J/g.

De préférence, ledit motif amide A, comme défini selon l'invention ci-haut et ci-après, est présent à un taux molaire allant de 55 à 80%, plus préférentiellement de 55 à 75%, encore plus préférentiellement de 55 à 70%, par rapport à l'ensemble des motifs dudit polymère matrice (polyamide) tel que défini ci-haut selon l'invention.

Selon une première option préférée du procédé selon l'invention décrite ci-haut, ladite composition a un motif B avec x' défini selon l'option B1 décrite ci-haut, en particulier avec comme diamine plus préférée pour ledit motif B, étant la MPMD. Le motif A reste comme défini ci-haut, c'est-à-dire x.T, avec x une diamine aliphatique linéaire en C₉ à C₁₈, de préférence C₉, C₁₀, C₁₁ ou C₁₂.

Selon une deuxième option préférée du procédé, ladite composition a un motif B où x' est la MXDA selon option B2 définie ci-haut. Le motif A reste comme défini pour la première option citée. Cette seconde option constitue ensemble avec la première citée ci-dessus les plus préférées de l'invention et en particulier cette seconde option est la plus préférée de l'invention.

Une troisième option préférée est celle où B est défini selon l'option B1 ou B2 ou B3 comme définie ci-haut et avec présence d'un motif C comme défini ci-haut en remplacement de B et jusqu'à 25%, de préférence jusqu'à 20%, plus préférentiellement jusqu'à 15% en moles et en particulier avec B étant défini selon l'option première ou seconde comme définie ci-haut.

Plus préférentiellement encore, ladite composition de polyamide est basée sur les motifs A et B sélectionnés comme suit :
- pour le motif A étant 9T, ledit motif B est sélectionné parmi : 10T, 11T, 12T, 13T, 14T, 15T, 16T, 17T et 18T, MPMD.T et MXD.T, de préférence 11T, 12T, 13T, 14T, 15T, 16T, 17T et 18T, MPMD.T et MXD.T , plus préférentiellement MPMD.T ou MXD.T, avec un taux molaire de B allant de 30 à 45%,
- pour le motif A étant 10T, ledit motif B est sélectionné parmi : 9T, 11T, 12T, 13T, 14T, 15T, 16T, 17T et 18T, MPMD.T et MXD.T, de préférence 12T, 13T, 14T, 15T, 16T, 17T et 18T, MPMD.T et MXD.T, plus préférentiellement MPMD.T ou MXD.T, avec un taux molaire de B allant de 25 à 45%,
- pour le motif A étant 11T, ledit motif B est sélectionné parmi : 9T, 10T, 12T, 13T, 14T, 15T, 16T, 17T et 18T, MPMD.T et MXD.T, de préférence 9T, 13T, 15T, 16T, 17T et 18T, MPMD.T et MXD.T, plus préférentiellement MPMD.T ou MXD.T, avec un taux molaire de B allant de 20 à 45%,
- pour le motif A étant 12T, ledit motif B est sélectionné parmi : 9T, 10T, 11T, 13T, 14T, 15T, 16T, 17T et 18T, MPMD.T et MXD.T, de préférence 9T, 10T, 14T, 15T, 16T, 17T et 18T, MPMD.T et MXD.T, plus préférentiellement MPMD.T ou MXD.T, avec un taux molaire de B allant de 20 à 45%.

Selon cette sélection, une première composition plus particulière de l'invention peut être définie, avec le motif A étant un motif 9T et le motif B étant sélectionné parmi : 10T, 11T, 12T, 13T, 14T, 15T, 16T, 17T et 18T, MPMD.T et MXD.T, de préférence 11T, 12T, 13T, 14T, 15T, 16T, 17T et 18T, MPMD.T et MXD.T, plus préférentiellement MPMD.T ou MXD.T, avec un taux molaire de B allant de 30 à 45%. Une deuxième composition particulière correspond à un motif A étant un motif 10T et le motif B étant sélectionné parmi : 9T, 11T, 12T, 13T, 14T, 15T, 16T, 17T et 18T, MPMD.T et MXD.T, de préférence 12T, 13T, 14T, 15T, 16T, 17T et 18T, MPMD.T et MXD.T, plus préférentiellement MPMD.T ou MXD.T, avec un taux molaire de B allant de 25 à 45%. Une troisième composition particulière correspond à un motif A étant un motif 11T et le motif B étant sélectionné parmi : 9T, 10T, 12T, 13T, 14T, 15T, 16T, 17T et 18T, MPMD.T et MXD.T, de préférence, 9T, 13T, 15T, 16T, 17T et 18T, MPMD.T et MXD.T, plus préférentiellement MPMD.T ou MXD.T, avec un taux molaire de B allant de 20 à 45%. Finalement, une autre composition particulière correspond à un motif A étant un motif 12T et le motif B étant sélectionné parmi : 9T, 10T, 11T, 13T, 14T, 15T, 16T, 17T et 18T, MPMD.T et MXD.T, de préférence 9T, 10T, 14T, 15T, 16T, 17T et 18T, MPMD.T et MXD.T, plus préférentiellement MPMD.T ou MXD.T, avec un taux molaire de B allant de 20 à 45%.

La masse moléculaire moyenne en nombre Mn dudit polymère (polyamide) final de la matrice thermoplastique dudit composite est de préférence dans une plage allant de 10000 à 40000, de préférence de 12000 à 30000. Ces valeurs Mn peuvent correspondre à des viscosités inhérentes supérieures ou égales à 0,8. Quand ledit polymère final de matrice est issu d'un prépolymère réactif dans une composition précurseur réactive a), ce prépolymère réactif a une Mn d'au moins deux fois inférieure à celle dudit polymère final de matrice.

Selon le procédé de l'invention, ladite composition de polyamide peut être une composition réactive de prépolymère selon a) et précurseur ou composition précurseur dudit polymère polyamide de ladite matrice du composite.

Dans le procédé de l'invention, selon la composition réactive a), on peut distinguer trois possibilités plus particulières. Selon une première possibilité, ladite composition a) peut comprendre ou être constituée de, au moins un prépolymère (polyamide) réactif porteur sur la même chaîne (c'est-à-dire sur le même prépolymère), de deux fonctions terminales X' et Y' fonctions respectivement coréactives entre elles par condensation, avec X' et Y' étant amine et carboxy ou carboxy et amine respectivement. Selon une deuxième possibilité, ladite composition réactive a) peut comprendre ou être constituée de, au moins deux prépolymères polyamides réactifs entre eux et porteurs chacun respectivement de deux fonctions terminales X' ou Y', identiques (identiques pour même prépolymère et différentes entre les deux prépolymères), ladite fonction X' d'un prépolymère pouvant réagir seulement avec ladite fonction Y' de l'autre prépolymère, en particulier par condensation, plus particulièrement avec X' et Y' étant amine et carboxy ou carboxy et amine respectivement. Cette réaction de condensation (ou de polycondensation) peut provoquer l'élimination de sous-produits. Ceux-ci peuvent être éliminés en travaillant de préférence selon un procédé utilisant une technologie de moule ouvert. Dans le cas d'un procédé en moule fermé, une étape de dégazage, de préférence sous vide, des sous-produits éliminés par la réaction est présente, ceci afin d'éviter la formation de microbulles des sous-produits dans le matériau composite final, qui (microbulles) peuvent affecter les performances mécaniques dudit matériau si elles ne sont pas éliminées ainsi. Selon une troisième option de composition réactive a), ladite composition a) ou composition précurseur a) peut comprendre ou être constituée de :
a1) au moins un prépolymère dudit polymère polyamide thermoplastique (de la matrice) comme déjà défini ci-haut avec ce prépolymère porteur de n fonctions réactives terminales X, identiques choisies parmi : -NH₂ (aminé), -CO₂H (carboxy) et -OH (hydroxyle), de préférence -NH₂ (aminé) et -CO₂H (carboxy), avec n étant 1 à 3, de préférence de 1 à 2, plus préférentiellement 1 ou 2, plus particulièrement 2
a2) au moins un allongeur de chaîne Y-A'-Y, avec A' étant un biradical hydrocarboné de structure non polymérique (ni polymère ni oligomère ni prépolymère), porteur de 2 fonctions réactives terminales Y identiques, réactives par polyaddition (sans élimination de sous-produit de réaction), avec au moins une fonction X dudit prépolymère a1), de préférence de masse moléculaire inférieure à 500 et plus préférentiellement inférieure à 400.
   NH₂ (aminé) signifie amine primaire et secondaire.

Dans ce dernier cas (troisième option), la structure semi-cristalline dudit polymère polyamide de la matrice dudit composite est essentiellement apportée par la structure dudit prépolymère a1) qui est également semi-cristallin.

Comme exemples convenables d'allongeurs a2) en fonction des fonctions X portées par ledit prépolymère polyamide semi-cristallin a1), on peut citer les suivants :
- lorsque X est NH₂ ou OH de préférence NH₂ :
   ∘ soit l'allongeur de chaîne Y-A'-Y correspond à
      ▪ Y choisi parmi les groupements : maléimide, isocyanate éventuellement bloqué, oxazinone et oxazolinone, de préférence oxazinone et oxazolinone et
      ▪ A' est un espaceur carboné ou radical carboné portant les fonctions ou groupements réactifs Y, choisi parmi :
         - une liaison covalente entre deux fonctions (groupements) Y dans le cas où Y = oxazinone et oxazolinone ou
         - une chaîne hydrocarbonée aliphatique ou une chaîne hydrocarbonée aromatique et/ou cycloaliphatique, ces deux dernières comprenant au moins un cycle de 5 ou 6 atomes de carbone éventuellement substitué, avec éventuellement ladite chaîne hydrocarbonée aliphatique ayant éventuellement un poids moléculaire de 14 à 200 g.mol⁻¹
   ∘ soit l'allongeur de chaîne Y-A'-Y correspond à Y étant un groupement caprolactame et à A' pouvant être un radical carbonyle tel que le carbonyl biscaprolactame ou à A' pouvant être un téréphtaloyle ou un isophtaloyle,
   ∘ soit ledit allongeur de chaîne Y-A'-Y porte un groupement Y d'anhydride cyclique et de préférence cet allongeur est choisi parmi un dianhydride carboxylique cycloaliphatique et/ou aromatique et plus préférentiellement il est choisi parmi : le dianhydride éthylènetétracarboxylique, le dianhydride pyromellitique, le dianhydride 3,3',4,4'-biphényltétracarboxylique, le dianhydride 1,4,5,8-naphtalènetétracarboxylique, le dianhydride perylènetétracarboxylique, le dianhydride 3,3',4,4'-benzophénone tétracarboxylique, le dianhydride 1,2,3,4-cyclobutanetétracarboxylique, le dianhydride hexafluoroisopropylidène bisphtalique, le dianhydride 9,9-bis(trifluorométhyl)xanthènetétracarboxylique, le dianhydride 3,3',4,4'-diphénylsulfonetétracarboxylique, le dianhydride bicyclo[2.2.2]oct-7-ène-2,3,5,6-tétracarboxylique, le dianhydride 1,2,3,4-cyclopentanetétracarboxylique, le dianhydride 3,3',4,4'-diphényl éther tétracarboxylique ou leurs mélanges
      et
- lorsque X est COOH :
   ∘ ledit allongeur de chaîne Y-A'-Y correspond à :
   ▪ Y choisi parmi les groupements : oxazoline, oxazine, imidazoline ou aziridine, comme le 1,1'-iso- ou téré- phtaloyl-bis (2-methyl aziridine)
   ▪ A' étant un espaceur (radical) carboné tel que défini ci-dessus.

Plus particulièrement, quand dans ledit allongeur Y-A'-Y, ladite fonction Y est choisie parmi oxazinone, oxazolinone, oxazine, oxazoline ou imidazoline, dans ce cas, dans l'allongeur de chaîne représenté par Y-A'-Y, A' peut représenter un alkylène tel que-(CH₂)ₘ- avec m allant de 1 à 14 et de préférence de 2 à 10 ou A' peut représenter un cycloalkylène et/ou un arylène substitué (alkyle) ou non substitué, comme les arylènes benzéniques, tels que les phénylènes o-, m-, -p ou les arylènes naphtaléniques et de préférence A' est un arylène et/ou un cycloalkylène.

Dans le cas du carbonyl- ou térephtaloyl- ou isophtaloyl- biscaprolactame comme allongeur de chaîne Y-A'-Y, les conditions préférées évitent l'élimination de sous-produit, comme le caprolactame lors de ladite polymérisation et mise en oeuvre à l'état fondu.

Dans le cas éventuel cité ci-haut où Y représente une fonction isocyanate bloqué, ce blocage peut être obtenu par des agents bloquants de la fonction isocyanate, comme la epsilon-caprolactame, la méthyl éthyl kétoxime, la diméthyl pyrazole, le di éthyl malonate.

De même, dans le cas où l'allongeur est un dianhydride réagissant avec un prépolymère P(X)n où X = NH₂, les conditions préférées évitent toute formation de cycle imide lors de la polymérisation et lors la mise en oeuvre à l'état fondu.

Pour X = OH ou NH₂, le groupement Y est choisi de préférence parmi : isocyanate (non bloqué), oxazinone et oxazolinone, plus préférentiellement oxazinone et oxazolinone, avec comme espaceur (radical) A' étant comme défini ci-haut.

Comme exemples d'allongeurs de chaîne portant des fonctions réactives Y oxazoline ou oxazine convenables à la mise en oeuvre de l'invention, on pourra se référer à ceux décrits sous références « A », « B », « C » et « D » à la page 7 de la demande EP 0 581 642, ainsi qu'à leurs procédés de préparation et leusr modes de réaction qui y sont exposés. « A » dans ce document est la bisoxazoline, « B » la bisoxazine, « C » la 1,3 phénylène bisoxazoline et « D » la 1,4-phénylène bisoxazoline.

Comme exemples d'allongeurs de chaîne à fonction réactive Y imidazoline convenables à la mise en oeuvre de l'invention, on pourra se référer à ceux décrits (« A » à « F ») à la page 7 à 8 et tableau 1 de la page 10 dans la demande EP 0 739 924 ainsi qu'à leurs procédés de préparation et leurs modes de réaction qui y sont exposés.

Comme exemples d'allongeurs de chaîne à fonction réactive Y = oxazinone ou oxazolinone qui conviennent à la mise en oeuvre de l'invention, on peut se référer à ceux décrits sous références « A » à « D » à la page 7 à 8 de la demande EP 0 581 641, ainsi qu'à leurs procédés de préparation et leurs modes de réaction qui y sont exposés.

Comme exemples de groupements Y oxazinones (cycle à 6 atomes) et oxazolinones (cycle à 5 atomes) convenables, on peut citer les groupements Y dérivés de : benzoxazinone d'oxazinone ou d'oxazolinone, avec comme espaceur A' pouvant être une simple liaison covalente avec pour allongeurs correspondants respectifs étant : bis-(benzoxazinone), bisoxazinone et bisoxazolinone.

A' peut être également un alkylène en C₁ à C₁₄, de préférence en C₂ à C₁₀ mais de préférence A' est un arylène et plus particulièrement il peut être un phénylène (substitué par Y en positions 1,2 ou 1,3 ou 1,4) ou un radical naphtalène (disubstitué par Y) ou un phtaloyle (iso- ou téréphtaloyle) ou A' peut être un cycloalkylène.

Pour les fonctions Y comme oxazine (cycle à 6), oxazoline (cycle à 5) et imidazoline (cycle à 5), le radical A' peut être comme décrit ci-haut avec A' pouvant être une simple liaison covalente et avec les allongeurs correspondants respectifs étant : bisoxazine, bisoxazoline et bisimidazoline. A' peut être également un alkylène en C₁ à C₁₄, de préférence en C₂ à C₁₀. Le radical A' est de préférence un arylène et, plus particulièrement, il peut être un phénylène (substitué par Y en positions 1,2 ou 1,3 ou 1,4) ou un radical naphtalène (disubstitué par Y) ou un phtaloyle (iso- ou téréphtaloyle) ou A' peut être un cycloalkylène.

Dans le cas où Y = aziridine (hétérocycle azoté à 3 atomes équivalent à l'oxyde d'éthylène en remplaçant l'éther -O- par -NH-), le radical A' peut être un phtaloyle (1,1'iso- ou téré- phtaloyle) avec comme exemple d'allongeur de ce type, la 1,1' isophtaloyl-bis(2-méthyl aziridine).

La présence d'un catalyseur de la réaction entre ledit prépolymère P(X)n et ledit allongeur Y-A'-Y à un taux allant de 0,001 à 2%, de préférence de 0,01 à 0,5% par rapport au poids total de deux co-réactants cités peut accélérer la réaction de (poly)addition et ainsi raccourcir le cycle de production. Un tel catalyseur peut être choisi parmi : 4,4' diméthyl aminopyridine, l'acide p-toluène sulfonique, acide phosphorique, NaOH et éventuellement ceux décrits pour une polycondensation ou transestérification comme décrits dans EP 0 425 341, page 9, lignes 1 à 7.

Selon un cas plus particulier du choix dudit allongeur, A' peut représenter un alkylène, tel que -(CH₂)ₘ- avec m allant de 1 à 14 et de préférence de 2 à 10 ou représente un arylène substitué alkyle ou non substitué, comme les arylènes benzéniques (comme les phénylènes o-, m-, -p) ou naphtaléniques (avec arylènes : naphtalenylènes). De préférence, A' représente un arylène qui peut être benzénique ou naphténique substitué ou non.

Comme déjà précisé, ledit allongeur de chaîne (a2) a une structure non polymérique et de préférence une masse moléculaire inférieure à 500, plus préférentiellement inférieure à 400.

Lesdits prépolymères réactifs de ladite composition réactive a), selon les trois options citées plus haut, ont une masse moléculaire moyenne en nombre Mn allant de 500 à 10000, de préférence de 1000 à 6000. Toutes les masses Mn sont déterminées par le calcul à partir du taux des fonctions terminales déterminé par titration potentiométrique en solution et la fonctionnalité desdits prépolymères.

Dans le cas des compositions réactives du procédé de l'invention selon définition a), lesdits prépolymères réactifs sont préparés par réaction classique de polycondensation entre les composants diamines et diacides correspondants et éventuellement (en fonction du motif D) aminoacides ou lactames en respectant la nature et proportions des motifs A et B et éventuellement C et D selon l'invention. Les prépolymères portant des fonctions X' et Y' amine et carboxy sur la même chaîne peuvent être obtenus par exemple en ajoutant une combinaison de monomères (aminoacide, diamine, diacide) présentant au total une quantité égale de motifs amine et carboxy. Une autre voie d'obtention de ces prépolymères porteurs d'une fonction X' et une Y' est, par exemple, en associant un prépolymère portant 2 fonctions identiques X' = amine, avec un prépolymère diacide porteur de Y' : carboxy, avec un taux molaire global en fonctions acides égal à celui des fonctions amines X' de départ.

Pour l'obtention de prépolymères fonctionnalisés avec des fonctions identiques (amines ou carboxy) sur la même chaîne, il suffit d'avoir un excès de diamine (ou de fonctions amines globalement) pour avoir des fonctions terminales amines ou excès de diacide (ou de fonctions carboxy globalement) pour avoir des fonctions terminales carboxy.

Dans le cas d'un prépolymère P(X)n avec n fonctions X identiques, la fonctionnalité 1 peut être obtenue en présence d'un composant monofonctionnel bloquant (monoacide ou monoamine en fonction de la nature de X = amine ou carboxy).

Une fonctionnalité n = 2 peut être obtenue à partir de composants difonctionnels : diamines et diacides avec excès de l'un pour fixer X en fonction de cet excès.

Pour n = 3 par exemple, pour un prépolymère P(X)n, il faut la présence d'un composant trifonctionnel, par exemple présence d'une triamine (une mole par chaîne de prépolymère) avec une diamine dans la réaction avec un diacide. La fonctionnalité préférée pour P(X)n est n = 2.

Les fibres de renfort ou renfort fibreux peuvent être un assemblage de fibres, de préférence de fibres longues, c'est-à-dire ayant un facteur de forme défini par le ratio de longueur sur diamètre de la fibre, ce qui signifie que ces fibres ont une section circulaire, supérieur à 1000, de préférence supérieur à 2000. Dans cet assemblage, les fibres peuvent être continues, sous forme de renfort unidirectionnel (UD) ou multidirectionnel (2D, 3D). En particulier, elles peuvent être sous forme de tissus, de nappes, de bandes ou de tresses et peuvent également être coupées par exemple sous forme de non tissés (mats) ou sous forme de feutres.

Ces fibres de renfort peuvent être choisies parmi :
- les fibres minérales, celles-ci ayant des températures de fusion Tf' élevées et supérieures à la température de fusion Tf dudit polyamide semi-cristallin de l'invention et supérieures à la température de polymérisation et/ou de mise en oeuvre.
- les fibres polymériques ou de polymère ayant une température de fusion Tf' ou à défaut de Tf', une température de transition vitreuse Tg', supérieure à la température de polymérisation ou supérieure à la température de fusion Tf dudit polyamide semi-cristallin constituant ladite matrice du composite et supérieure à la température de mise en oeuvre
- ou les mélanges des fibres citées ci-haut.

Comme fibres minérales convenables pour l'invention, on peut citer les fibres de carbone, ce qui inclut les fibres de nanotubes ou nanotubes de carbone (NTC), les nanofibres de carbone ou les graphènes ; les fibres de silice comme les fibres de verre, notamment de type E, R ou S2 ; les fibres de bore ; les fibres céramiques, notamment fibres de carbure de silicium, fibres de carbure de bore, fibres de carbonitrure de bore, fibres de nitrure de silicium, fibres de nitrure de bore, les fibres de basalte ; les fibres ou filaments à base de métaux et/ou de leurs alliages ; les fibres des oxydes métalliques, notamment d'alumine (Al₂O₃) ; les fibres métallisées comme les fibres de verre métallisées et les fibres de carbone métallisées ou les mélanges des fibres précitées.

Plus particulièrement, ces fibres peuvent être choisies comme suit :
- les fibres minérales peuvent être choisies parmi : les fibres de carbone, les fibres de nanotubes de carbone, fibres de verre, notamment de type E, R ou S2, fibres de bore, fibres céramiques, notamment fibres de carbure de silicium, fibres de carbure de bore, fibres de carbonitrure de bore, fibres de nitrure de silicium, fibres de nitrure de bore, fibres de basalte, fibres ou filaments à base de métaux et/ou leurs alliages, fibres à base d'oxydes métalliques comme Al₂O₃, les fibres métallisées comme les fibres de verre métallisées et les fibres de carbone métallisées ou les mélanges des fibres précitées, et
- les fibres de polymère ou polymériques, sous condition précitée ci-haut, sont choisies parmi :
   ▪ les fibres de polymères thermodurcissables et plus particulièrement choisies parmi : les polyesters insaturés, les résines époxy, les esters vinyliques, les résines phénoliques, les polyuréthanes, les cyanoacrylates et les polyimides, tels que les résines bis-maléimide, les aminoplastes résultant de la réaction d'une amine telle que la mélamine avec un aldéhyde tel que le glyoxal ou le formaldéhyde
   ▪ les fibres de polymères thermoplastiques et plus particulièrement choisies parmi : le polyéthylène téréphtalate (PET), le polybutylène téréphtalate (PBT), les polyoléfines haute densité telles que le polyéthylène (PET), le polypropylène (PP) et les copolymères PET/PP, PVOH (polyvinyl alcool)
   ▪ les fibres de polyamides répondant à l'une des formules : 6, 11, 12, 6.10, 6.12, 6.6,4.6,
   ▪ les fibres d'aramides (comme le Kevlar®) et polyamides aromatiques tels que ceux répondant à l'une des formules : PPD.T, MPD.I, PAA et PPA, avec PPD et MPD étant respectivement la p- et m-phénylène diamine, PAA étant les polyarylamides et PPA étant les polyphtalamides
   ▪ les fibres de copolymères blocs de polyamide tel que le polyamide/polyéther, les fibres de polyaryléthers cétones (PAEK) telles que la polyétheréther cétone (PEEK), la polyéthercétone cétone (PEKK), la polyéthercétoneéthercétone cétone (PEKEKK).

Les fibres de renfort préférées sont des fibres longues (à section circulaire) choisies parmi les : fibres de carbone, y compris métallisées, fibres de verre, y compris métallisées de type E, R, S2, fibres d'aramides (comme le Kevlar®) ou de polyamides aromatiques, les fibres de polyaryléthers cétones (PAEK), telle que la polyétheréther cétone (PEEK), fibres de la polyéthercétone cétone (PEKK), fibres de la polyéthercétoneéthercétone cétone (PEKEKK) ou leurs mélanges.

Les fibres plus particulièrement préférées sont choisies parmi : fibres de verre, fibres de carbone, de céramique et fibres d'aramides (comme le Kevlar®) ou leurs mélanges. Ces fibres ont une section circulaire.

Lesdites fibres peuvent représenter des taux de 40 à 70% en volume et de préférence de 50 à 65% en volume dudit matériau composite.

L'assemblage de fibres peut être aléatoire (mat), unidirectionnel (UD) ou multidirectionnel (2D, 3D ou autre). Son grammage, c'est-à-dire son poids par mètre carré, peut aller de 100 à 1000 g/m², de préférence de 200 à 700g/m². Les fibres peuvent être sous forme tissée ou non tissée, en particulier sous forme de tissus et d'étoffes de renfort. Elles peuvent en particulier être assemblées et liées sous forme de préforme ayant déjà la forme de la pièce finale. Comme liant convenable, on peut utiliser une composition selon a) et à défaut un liant compatible avec celle-ci (composition a).

La composition du procédé selon l'invention comprend un renfort fibreux à base de fibres, de préférence longues, en particulier avec L/D supérieur à 1000, de préférence supérieur à 2000 et plus particulièrement sélectionnées parmi les fibres de verre, de carbone, de céramique, d'aramide ou leurs mélanges.

Plus particulièrement, la composition du procédé de selon l'invention est une composition de moulage. Comme telle, elle peut comprendre, en plus des fibres de renfort de préférence longues, d'autres charges et additifs.

Parmi les charges convenables, on peut citer par exemple : les charges minérales ou organiques : le noir de carbone, nanotubes de carbone (NTC), nanofibrilles de carbone, billes de verre, polymères recyclés broyés à l'état de poudre.

Parmi les additifs convenables, on peut citer : des additifs absorbant dans l'UV ou IR de façon à permettre le soudage du composite obtenu, par une technologie laser (UV ou IR) et des stabilisants thermiques choisis parmi les antioxydants de type phénols stériquement encombrés ou amines stériquement encombrées (HALS). La fonction de ces stabilisants est de prévenir l'oxydation thermique et la photoxydation et dégradation conséquente du polyamide matrice du composite obtenu.

Plus particulièrement, ledit procédé peut comprendre les étapes suivantes :
i) imprégnation à l'état fondu d'un renfort fibreux par une composition telle que définie ci-haut selon l'invention mais ne comprenant pas ledit renfort fibreux dans un moule ouvert ou fermé ou hors moule, afin d'obtenir une composition telle que définie selon l'invention, c'est-à-dire avec renfort fibreux imprégné,
ii) réaction de polymérisation par chauffage de ladite composition de l'étape i), dans le cas d'une composition réactive a) de polyamide comme définie selon l'invention, avec allongement de chaîne (augmentation de masse moléculaire), suivant le cas, par réaction de polycondensation (y compris autocondensation d'un même prépolymère), soit par réaction de polyaddition en masse à l'état fondu, avec dans le cas de la polycondensation, une élimination sous vide des produits de condensation quand il s'agit d'un moule fermé, à l'aide d'un système d'extraction sous vide, sinon et de préférence avec la polycondensation étant réalisée en moule ouvert ou hors moule
iii) une étape de mise en oeuvre par moulage ou par un autre système de mise en oeuvre et simultanément avec l'étape ii) de polymérisation.

Dans ledit procédé selon l'invention, ladite mise en oeuvre peut être réalisée de préférence selon un procédé RTM, S-RIM, injection-compression, pultrusion ou par infusion, en particulier dans le cas d'une composition réactive a).

Un autre objet, également couvert par la présente invention, concerne le polymère thermoplastique polyamide semi-cristallin, en particulier le polymère qui correspond au (ou est le) polymère de la matrice thermoplastique dudit matériau composite thermoplastique de la présente invention, ledit polymère étant un polymère susceptible d'être obtenu à partir de ladite composition réactive a) telle que définie ci-haut selon la présente invention. Ce polymère thermoplastique est par définition un des composants essentiels de la composition du matériau composite thermoplastique de la présente invention et fait donc partie de l'invention comme produit lié à la présente invention avec le même concept inventif commun face au même problème technique à résoudre. L'invention couvre donc également l'utilisation dudit polymère thermoplastique selon l'invention en tant que matrice thermoplastique d'un composite thermoplastique à base d'un renfort fibreux comme décrit ci-haut. Plus particulièrement préférés sont les polymères correspondant aux compositions de polyamide telles que définies selon la première option préférée de composition, avec B étant défini selon l'option B1) ou la deuxième option avec B défini selon option B2) ou selon la troisième option préférée de composition, où B est défini selon options B1) ou B2) et C est présent comme défini ci-haut.

En dernier, l'invention concerne une pièce mécanique ou une pièce de structure de matériau composite thermoplastique, laquelle résulte de l'utilisation d'au moins une composition de l'invention comme définie ci-haut ou de l'utilisation d'un polymère polyamide semi-cristallin tel que défini selon l'invention ou d'un matériau composite thermoplastique tel que défini ci-avant ou laquelle pièce est obtenue par un procédé tel que défini ci-haut selon l'invention.

Plus particulièrement, ladite pièce de structure est une pièce automobile post-traitée par cataphorèse, en particulier avec une Tg d'au moins 90°C.

Selon une autre option, elle est une pièce pour éolienne, en particulier avec une Tg d'au moins 100°C.

Selon une troisième option particulière, elle est une pièce pour l'aéronautique, en particulier avec une Tg d'au moins 120°C.

### Méthodes de détermination des caractéristiques citées

- La viscosité à l'état fondu du prépolymère ou de la composition précurseur est mesurée suivant le manuel de référence du constructeur de l'appareil de mesure utilisé, qui est un rhéomètre Physica MCR301, sous balayage d'azote à la température donnée sous cisaillement de 100 s⁻¹, entre deux plans parallèles de diamètre de 50 mm.
- La Mn du prépolymère ou du polymère thermoplastique est déterminée à partir de la titration (dosage) des fonctions terminales selon une méthode potentiométrique (dosage direct pour NH₂ ou carboxy) et à partir de la fonctionnalité théorique qui est de 2 (en fonctions terminales) pour prépolymères et polymères linéaires préparés à partir de monomères bifonctionnels seuls.
- La mesure de la viscosité intrinsèque ou inhérente est réalisée dans le m-crésol. La méthode est bien connue de l'homme du métier. On suit la norme ISO 937 mais en changeant le solvant (utilisation du m-crésol à la place de l'acide sulfurique et la température étant de 20°C).
- La température de transition vitreuse Tg des polymères thermoplastiques utilisés est mesurée à l'aide d'un calorimètre différentiel à balayage (DSC), après un deuxième passage en chauffe, suivant la norme ISO 11357-2. La vitesse de chauffage et de refroidissement est de 20°C/min.
- La température de fusion Tf et la température de cristallisation Tc sont mesurées par DSC, après une première chauffe, selon la norme ISO 11357-3. La vitesse de chauffage et de refroidissement est de 20°C/min.
- L'enthalpie de cristallisation dudit polymère de matrice est mesurée en Calorimétrie Différentielle à Balayage (DSC) selon la norme ISO 11357-3.

### Exemples

### A - Préparation d'un polymère polyamide par voie directe (sans allongement de chaîne d'un prépolymère réactif)

Dans un réacteur autoclave de 14 litres, on introduit 5 kg des matières premières suivantes :
- 500 g d'eau,
- la ou les diamines,
- l'aminoacide (éventuellement),
- le ou les diacides,
- le régulateur de chaîne monofonctionnel : acide benzoïque en quantité adaptée à la Mn visée et variant (acide benzoïque) de 50 à 100 g,
- 35 g d'hypophosphite de sodium en solution,
- 0,1 g d'un antimousse WACKER AK1000 (société Wacker Silicones).

La nature et rapports molaires des motifs et structures moléculaires des polyamides (par essai référencé) sont donnés au tableau 1 ci-dessous.

Le réacteur fermé est purgé de son oxygène résiduel puis chauffé à une température de 230°C par rapport à la matière introduite. Après 30 minutes d'agitation dans ces conditions, la vapeur sous pression qui s'est formée dans le réacteur est détendue progressivement en 60 minutes, tout en augmentant progressivement la température matière de manière à ce qu'elle s'établisse à Tf + 10°C à pression atmosphérique.

La polymérisation est ensuite poursuivie sous balayage d'azote de 20 l/h jusqu'à obtention de la masse Mn visée indiquée au tableau de caractéristiques.

Le polymère est ensuite vidangé par la vanne de fond puis refroidi dans un bac d'eau puis mis sous forme de granulés.

Les résultats sont présentés dans le tableau 1 suivant.

**Tableau 1 : Caractéristiques des polymères préparés par voie directe sans prépolymère réactif**

| Réf | Type essai | Structure moléculaire / Composition molaire | Tf (°C) / Tg (°C) | Tf - Tg (°C) | Tc (°C) | Tf-Tc (°C) | ΔHc (J/g) | Viscosité inhérente (m-crésol) | Fins de chaînes non réactives meq/kg(**) (calc) | Indice acide meq/kg | Indice amine meq/kg | Mn g/mole |
|---|---|---|---|---|---|---|---|---|---|---|---|---|
| 1 | Comparatif, (EP1988 113) | 10.T/6.T (59/41) | 281/122 | 159 | 236 | 45 | 44 | 1,12 | 103 | 45 | 60 | 9600 |
| 2 | Comparatif, (EP198811) | 10.T/6.T/11 (60/24/16) | 269/111 | 158 | 220 | 49 | 39 | 1,25 | 91 | 55 | 48 | 10300 |
| 3 | Comparatif, (WO 2011/00393) | 10.T/TMD.T (59/41) | 263/133 | 130 | 197 | 66 | 35 | 1,15 | 97 | 63 | 35 | 10250 |
| 4 | Comparatif | 10.T (100) | 314/120 | 194 | 279 | 35 | 63 | insoluble | 154 | 54 | 22 | 8700 |
| 5 | Comparatif | 10.T/11 (67/33) | 269/84 | 185 | 232 | 37 | 50 | 1,19 | 119 | 55 | 40 | 9350 |
| 6 | Comparatif | 10.T/11 (59/41) | 261/78 | 183 | 213 | 48 | 39 | 1,15 | 112 | 22 | 34 | 11900 |
| 7 | Comparatif | 10.T/10.I (67/33) | 269/110 | 159 | 205 | 64 | 32 | 1,12 | 97 | 48 | 51 | 10100 |
| 8 | Comparatif | MXD.T/11 (59/41) | 211/111 | 100 | (*) | > 100 | 12 | 1,25 | | | | |
| 9 | Comparatif | MPMD.T/11 (59/41) | - / 84 | - | (*) | - | - | 1,14 | | | | |
| 10 | Selon l'invention | 10.T/MXD.T (67/33) | 270/130 | 140 | 244 | 26 | 47 | 1,03 | 143 | 85 | 42 | 7400 |
| 11 | Selon l'invention | 10.T/MXD.T (59/41) | 269/131 | 138 | 241 | 28 | 44 | 1,01 | 100 | 134 | 38 | 7350 |
| 12 | Comparatif, hors invention | 10.T/MXD.T (50/50) | 262/137 | 125 | 211 | 51 | 17 | 0,99 | 136 | 97 | 37 | 7400 |
| 13 | Selon l'invention | 10.T/MPMD.T (67/33) | 270/124 | 146 | 230 | 40 | 45 | 1,05 | 139 | 63 | 42 | 8200 |
| 14 | Selon l'invention | 10.T/MPMD.T (59/41) | 264/126 | 138 | 219 | 45 | 40 | 1,11 | 155 | 59 | 27 | 8300 |
| 15 | Comparatif, hors invention | 10.T/MPMD.T (50/50) | 245/127 | 118 | 185 | 60 | 22 | 1,12 | | | | |
| 16 | Comparatif, hors invention | 10.T/12.T (59/41) | 280/114 | 166 | 260 | 20 | 62 | 0,81 | 0 | 263 | < 10 | 7600 |
| 17 | Selon l'invention | 10.T/12.T/11 (60/24/16) | 271/105 | 166 | 246 | 25 | 56 | 0,98 | 169 | 49 | 32 | 8000 |
| 18 | Selon l'invention | 18.T/MXD.T (71/29) | 264/95 | 169 | 242 | 22 | 47 | 0,86 | 174 | 73 | 35 | 7100 |

| | | | | | | | | | | | | |
|---|---|---|---|---|---|---|---|---|---|---|---|---|
| (*) : Pas de cristallisation au refroidissement (**) : Milliéquivalents par kilogramme | | | | | | | | | | | | |

Les essais représentatifs de l'invention montrent des performances supérieures par rapport aux essais comparatifs hors invention, dont certains représentatifs de l'état de l'art antérieur cité, en particulier en termes d'écart Tf-Tc faible (< 30°C) et pour Tf-Tc allant de 30 à 50°C avec écart Tf-Tg < 150°C.

### B - Préparation d'un polymère polyamide par allongement de chaîne d'un prépolymère (ou oligomère) réactif

### B-1 Préparation du prépolymère réactif P(X)n

Dans un réacteur autoclave de 14 litres, on introduit 5 kg des matières premières suivantes :
- 500 g d'eau,
- la ou les diamines,
- l'aminoacide (éventuellement),
- le diacide téréphtalique,
- 35 g d'hypophosphite de sodium en solution,
- 0,1 g d'un antimousse WACKER AK1000 (société Wacker Silicones).

La nature et rapports molaires des motifs et structures moléculaires des polyamides prépolymères réactifs (par essai référencé) sont donnés au tableau 2 ci-dessous.

Le réacteur fermé est purgé de son oxygène résiduel puis chauffé à une température de 230°C de la matière. Après 30 minutes d'agitation dans ces conditions, la vapeur sous pression qui s'est formée dans le réacteur est détendue progressivement en 60 minutes, tout en augmentant progressivement la température matière de manière à ce qu'elle s'établisse à Tf + 10°C à pression atmosphérique.

L'oligomère (prépolymère) est ensuite vidangé par la vanne de fond puis refroidi dans un bac d'eau puis broyé.

Les caractéristiques sont présentées au tableau 2 suivant.

**Tableau 2 : Caractéristiques des prépolymères préparés**

| Réf | | Structure moléculaire et composition molaire | Tf (°C) | Tg (°C) | Tf-Tg (°C) | Tc (°C) | Tf-Tc (°C) | ΔH (J/g) | Viscosité inhérente (dans m-crésol) | Indice d'acide meq/kg(*) | Indice d'amine meq/kg | Mn g/mole |
|---|---|---|---|---|---|---|---|---|---|---|---|---|
| 19 | Selon l'invention | 10.T/MXD.T (59/41) | 264 | 117 | 147 | 232 | 32 | 42 | 0,32 | 878 | 0 | 2280 |
| 20 | Selon l'invention | 10.T/MPMD.T (59/41) | 265 | 109 | 156 | 221 | 44 | 41 | 0,32 | 858 | 0 | 2330 |

| | | | | | | | | | | | | |
|---|---|---|---|---|---|---|---|---|---|---|---|---|
| (*) : Milliéquivalents par kilogramme | | | | | | | | | | | | |

### B-2 Préparation du polymère polyamide par allongement de chaîne avec un allongeur type Y-A-Y

10 g de l'oligomère ci-dessus séché et broyé, sont mélangés avec une quantité stoechiométrique de 1,3 phénylène bis-oxazoline (PBO). Le mélange est introduit sous balayage d'azote dans une micro-extrudeuse de marque DSM (de volume 15mL) à vis coniques corotatives préchauffée à 280°C sous rotation des vis à 100 tr/mn. Le mélange est laissé sous recirculation dans la micro-extrudeuse et l'augmentation de la viscosité est suivie par mesure de la force normale. Au bout de 2 minutes environ, un palier est atteint et le contenu de la micro-extrudeuse est vidangé sous forme d'un jonc. Le produit refroidi à l'air est mis sous forme de granulés.

Les résultats des analyses des produits sont présentés au tableau 3 ci-dessous.

**Tableau 3 : Caractéristiques analytiques des polyamides obtenus avec allongement de chaîne**

| Réf | | Structure moléculaire / Composition molaire | Tf (°C) | Tg (°C) | Tf-Tg (°C) | Tc (°C) | Tf-Tc (°C) | ΔH (J/g) | Viscosité inhérente (dans m-crésol) |
|---|---|---|---|---|---|---|---|---|---|
| 21 | Selon l'invention | 10.T/MXD.T (59/41) | 256 | 135 | 121 | 219 | 37 | 30 | 1,3 |
| 22 | Selon l'invention | 10.T/MPMD.T (59/41) | 262 | 128 | 134 | 210 | 52 | 36 | 0,82 |

### C - Formulation composite à fibres courtes

### C-1 Préparation de la formulation

Les granulés issus de l'étape A sont compoundés sur extrudeuse bi-vis Evolum 32 selon un profil de température plat de 280°C. Le débit est de 40 kg/h et la vitesse de 300 tr/mn. Le polymère (49,65% en poids) et les additifs (0.3% de stérarate de Calcium et 0,4% d'Irganox 1010) sont introduits dans la trémie principale. La fibre de verre ASAHI CS 692 FT (49,65% en poids) est introduite via un gaveur latéral en deuxième partie d'extrudeuse. Les joncs sont refroidis dans l'eau et mis sous forme de granulés.

Les résultats des analyses des produits obtenus sont présentés au tableau 4 ci-dessous.

**Tableau 4 : Caractéristiques obtenues des formulations mises en oeuvre**

| Réf | | Composition molaire du polymère | Tf (°C) | Tg (°C) | Tf-Tg (°C) | Tc (°C) | Tf-Tc (°C) | ΔH (J/g) |
|---|---|---|---|---|---|---|---|---|
| 23 | Comparatif | 10.T/11 (67/33) | 269 | 81 | 188 | 234 | 35 | 24 |
| 24 | Comparatif, Selon EP 1 988 113 | 10.T/6.T/11 (60/24/16) | 269 | 105 | 164 | 237 | 32 | 30 |
| 25 | Selon l'invention | 10.T/MXD.T (59/41) | 267 | 128 | 139 | 241 | 26 | 22 |

La composition à base de 10.T/MXDT présente toujours une aptitude à la cristallisation plus élevée associée à une Tg très élevée et en particulier Tf-Tg faible.

### C-2 Propriétés mécaniques (tenue à chaud) avec la température

Les granulés des formulations ci-dessous sont mis sous forme de barreaux 80*10* 4 mm par injection-moulage à l'aide d'une machine Krauss Maffei 60 tonnes B2 équipée d'une vis de diamètre ∅ 30 mm. Les échantillons ont été injectés à 260°C dans un moule à 90°C à 130 tr/min (pression matière mesurée de 833 bars). La matière a été maintenue sous pression à 611 bars pendant 15 s, avant un refroidissement du moule en 20 s.

Des tests de flexion 3 points selon la norme ISO 178 sont réalisés à différentes températures sur un dynamomètre Zwick 1. Les rayons du poinçon et des appuis sont de 5 mm. La vitesse est de 2 mm/min et le module est calculé entre 0,05 et 0,25% de déformation.

Les résultats sont donnés dans le tableau 5 ci-dessous.

**Tableau 5 : Résultats de performances mécaniques**

| Réf | | Structure moléculaire et composition molaire | Tf (°C) | Tg (°C) | Tf-Tg (°C) | Module E à 23°C (MPa) | Module E à 90°C en MPa/(Perte % vs 23°C) | Module E à 100°C en MPa/(Perte % vs 23°C) | Module E à 120°C en MPa/ (Perte % vs 23°C) |
|---|---|---|---|---|---|---|---|---|---|
| 23 | Comparatif | 10.T/11 (67/33) | 269 | 81 | 188 | 12690 | 7370/ (-42%) | 6110/ (-52%) | 5260/ (-59%) |
| 24 | Comparatif (EP198811) | 10.T/6.T/11 (60/24/16) | 269 | 105 | 164 | 10380 | 8930/ (-14%) | 4900/ (-53%) | 3860/ (-63%) |
| 25 | Selon l'invention | 10.T/MXD.T (59/41) | 267 | 128 | 139 | 8780 | 7890/ (-10%) | 8040/ (-8%) | 5730/ (-35%) |

On remarque une tenue mécanique en module, significativement supérieure et favorable à la composition selon l'invention avec une perte de performances à 100°C de plus de 5 fois inférieure à celle des compositions hors invention.

## Revendications

1. Procédé de fabrication d'une pièce mécanique à base d'un matériau composite thermoplastique, **caractérisé en ce que** ledit matériau composite thermoplastique est obtenu à partir d'une composition pour matériau composite thermoplastique comprenant des fibres de renfort et une matrice thermoplastique imprégnant lesdites fibres, ladite matrice étant à base d'au moins un polymère thermoplastique qui est un polymère polyamide semi-cristallin ayant une température de transition vitreuse Tg d'au moins 90°C, mesurée à l'aide d'un calorimètre différentiel à balayage (DSC), après un deuxième passage en chauffe, suivant la norme ISO 11357-2 avec une vitesse de chauffage et de refroidissement de 20°C/min, et avec une température de fusion Tf inférieure ou égale à 280°C, mesurée par DSC, après une première chauffe, selon la norme ISO 11357-3 avec une vitesse de chauffage et de refroidissement de 20°C/min, et **en ce que** ladite composition, en plus desdites fibres de renfort comprend :
a) une composition réactive comprenant, au moins un prépolymère polyamide réactif, ladite composition étant une composition précurseur dudit polymère polyamide de ladite matrice,
et
- **en ce que** ladite composition a) comprend, un ou plusieurs polyamides qui sont des prépolymères selon a), lesquels comprennent des motifs amides A et B différents, sélectionnés comme suit :
- A : est un motif amide majoritaire présent à un taux molaire allant de 55 à 95%, choisi parmi les motifs x.T, où x est une diamine aliphatique linéaire en C₉ à C₁₈ et où T est l'acide téréphtalique,
- B : est un motif amide différent de A, lequel motif B est présent à un taux molaire allant de 5 à 45% en fonction de la Tf du polyamide à base de motif A et ledit motif amide B est choisi parmi les motifs x'.T où x' est choisi parmi :
∘ B1) une diamine aliphatique ramifiée portant une seule ramification (ou branchement) méthyle ou éthyle et ayant une longueur de chaîne principale différente d'au moins deux atomes de carbone par rapport à la longueur de chaîne principale de la diamine x dudit motif A associé, ou
∘ B2) la m-xylylène diamine (MXD) ou
∘ B3) une diamine aliphatique linéaire en C₄ à C₁₈ quand dans le motif A, ladite diamine x est une diamine aliphatique linéaire en C₁₁ à C₁₈ et x' est une diamine en C₉ à C₁₈ quand dans le motif A ladite diamine x est une diamine en C₉ ou C₁₀ avec une différence d'au moins deux atomes de carbone entre la chaîne de diamine x dudit motif A et la chaîne de diamine x' dudit motif B,
et sous la condition que la somme des taux molaires de A + B soit égale à 100%,
et **en ce que** ledit procédé comprend au moins une étape de polymérisation d'au moins une composition réactive a) telle que définie ci-haut.

2. Procédé selon la revendication 1, **caractérisé en ce que** lesdits prépolymères selon a) comprennent en plus desdits motifs amides A et B, des motifs amides C et D, définis comme suit :
- C : motif amide différent de A et de B, choisi parmi les motifs amides à base d'une structure cycloaliphatique et/ou aromatique ou à base de x'T tel que défini ci-haut pour B mais avec x' différent de x' pour le motif B,
ou/et
- D : motif amide différent de A, de B et de C et choisi parmi les motifs amides aliphatiques issus de :
i. aminoacides ou lactames en C₆ à C₁₂ ou leurs mélanges
ii. la réaction d'un diacide aliphatique linéaire en C₆ à C₁₈ et d'une diamine aliphatique linéaire en C₆ à C₁₈ ou de leur mélanges,
et sous la condition que la somme des taux molaires A + B + C + D soit égale à 100%.

3. Procédé selon la revendication 1 ou 2, **caractérisé en ce qu'**il comprend les étapes suivantes :
i) imprégnation à l'état fondu de fibres de renfort par une composition telle que définie selon la revendication 1 mais ne comprenant pas lesdites fibres de renfort dans un moule ouvert ou fermé ou hors moule, afin d'obtenir une composition pour matériau composite comme définie dans la revendication 1,
ii) réaction de polymérisation dans le cas d'une composition réactive a) de polyamide, par chauffage de ladite composition de l'étape i) avec allongement de chaîne, suivant le cas, par réaction de polycondensation ou par réaction de polyaddition, en masse à l'état fondu, avec dans le cas de la polycondensation, une élimination sous vide des produits de condensation quand il s'agit d'un moule fermé, à l'aide d'un système d'extraction sous vide, sinon la polycondensation étant réalisée en moule ouvert ou hors moule,
iii) une étape de mise en oeuvre par moulage ou par un autre système de mise en oeuvre et simultanément avec l'étape ii) de polymérisation.

4. Procédé selon la revendication 3, caractérisé en ce ladite mise en oeuvre est réalisée selon un procédé RTM, S-RIM, injection-compression, pultrusion ou par infusion dans le cas d'une composition réactive a).

5. Procédé selon la revendication 3 ou 4, caractérisé en ce ladite mise en oeuvre est réalisée selon un procédé par pultrusion.

6. Procédé selon l'une des revendications 2 à 5, **caractérisé en ce que** ledit motif amide C est présent et en remplacement partiel de B à un taux molaire allant jusqu'à 25% par rapport audit motif B.

7. Procédé selon l'une des revendications 2 à 6, **caractérisé en ce que** ledit motif D est présent et en remplacement partiel de B à un taux molaire allant jusqu' à 70%, par rapport audit motif B.

8. Procédé selon l'une des revendications 1 à 7, **caractérisé en ce que** la différence Tf-Tc, entre la température de fusion Tf et la température de cristallisation Tc dudit polymère matrice, ne dépasse pas 50°C.

9. Procédé selon l'une des revendications 1 à 8, **caractérisé en ce que** l'enthalpie de cristallisation, mesurée en Calorimétrie Différentielle à Balayage (DSC) selon la Norme ISO 11357-3, est supérieure à 40 J/g.

10. Procédé selon l'une des revendications 1 à 9, **caractérisé en ce que** ledit motif amide A est présent avec un taux molaire allant de 55 à 80% par rapport à l'ensemble des motifs dudit polymère.

11. Procédé selon l'une des revendications 1 à 10, **caractérisé en ce que** ledit motif B correspond à x'T avec x' choisi selon l'option B1) avec x' étant MPMD.

12. Procédé selon l'une des revendications 1 à 10, **caractérisée en ce que** ledit motif B correspond à x'T avec x' choisi selon option B2), x' étant la MXD.

13. Procédé selon l'une des revendications 1 à 10, **caractérisée en ce que** ledit motif B correspond à une diamine aliphatique linéaire selon l'option B3).

14. Procédé selon l'une des revendications 1 à 13, **caractérisée en ce que** les motifs A et B sont sélectionnés comme suit :
- pour le motif A étant 9T, ledit motif B est sélectionné parmi : 10T, 11T, 12T, 13T, 14T, 15T, 16T, 17T et 18T, MPMD.T et MXD.T avec un taux molaire de B allant de 30 à 45%
- pour le motif A étant 10T, ledit motif B est sélectionné parmi : 9T, 11T, 12T, 13T, 14T, 15T, 16T, 17T et 18T, MPMD.T et MXD.T avec un taux molaire de B allant de 25 à 45%
- pour le motif A étant 11T, ledit motif B est sélectionné parmi : 9T, 10T, 12T, 13T, 14T, 15T, 16T, 17T et 18T, MPMD.T et MXD.T avec un taux molaire de B allant de 20 à 45%
- pour le motif A étant 12T, ledit motif B est sélectionné parmi : 9T, 10T, 11T, 13T, 14T, 15T, 16T, 17T et 18T, MPMD.T et MXD.T avec un taux molaire de B allant de 20 à 45%.

15. Procédé selon l'une des revendications 1 à 14, **caractérisé en ce qu'**une partie du motif B qui est jusqu'à 70% par rapport à B, est remplacée par un motif C et/ou D comme définis selon la revendication 2.

16. Procédé selon l'une des revendications 1 à 15, **caractérisé en ce que** ladite composition a) comprend ou est constituée de, au moins un prépolymère réactif porteur sur la même chaîne de deux fonctions terminales X' et Y', fonctions respectivement coréactives entre elles par condensation, avec X' et Y' étant amine et carboxy ou carboxy et amine respectivement.

17. Procédé selon l'une des revendications 1 à 15, **caractérisé en ce que** ladite composition réactive a) comprend au moins deux prépolymères polyamides réactifs entre eux et porteurs chacun respectivement de deux fonctions terminales identiques X' ou Y', ladite fonction X' d'un prépolymère pouvant réagir seulement avec ladite fonction Y' de l'autre prépolymère par condensation, .

18. Procédé selon l'une des revendications 15, **caractérisé en ce que** ladite composition a) ou composition précurseur, comprend:
a1) au moins un prépolymère dudit polymère polyamide thermoplastique, porteur de n fonctions réactives terminales X, choisies parmi : -NH₂, -CO₂H et -OH avec n étant 1 à 3
a2) au moins un allongeur de chaîne Y-A'-Y, avec A' étant un biradical hydrocarboné, de structure non polymérique, porteur de 2 fonctions réactives terminales Y identiques, réactives par polyaddition avec au moins une fonction X dudit prépolymère a1).

19. Procédé selon l'une des revendications 1 à 18, **caractérisé en ce que** lesdits prépolymères réactifs de ladite composition a) ont une masse moléculaire moyenne en nombre Mn allant de 500 à 10000.

20. Procédé selon l'une des revendications 1 à 19, **caractérisé en ce qu'**elle comprend un renfort fibreux avec des fibres longues sélectionnées parmi les fibres de verre, de carbone, de céramique, d'aramide ou leurs mélanges.

21. Pièce mécanique ou de structure de matériau composite thermoplastique, **caractérisée en ce qu'**elle est obtenue par un procédé tel que défini selon l'une des revendications 1 à 20.

22. Pièce mécanique selon la revendication 21, **caractérisée en ce qu'**elle est obtenue par un procédé tel que défini selon la revendication 4 ou 5.

23. Pièce mécanique selon la revendication 21 ou 22, **caractérisée en ce qu'**elle concerne des applications dans le domaine de l'automobile, ferroviaire, marin ou maritime, de l'éolien, photovoltaïque, solaire, y compris panneaux solaires et composants de centrales solaires, du sport, aéronautique et spatial, transport routier concernant les camions, du bâtiment, génie civil, des panneaux et des loisirs.

24. Pièce de structure selon la revendication 21 ou 22, **caractérisée en ce qu'**il s'agit d'une pièce automobile post-traitée par cataphorèse.

25. Pièce selon la revendication 21 ou 22, **caractérisée en ce qu'**il s'agit d'une pièce pour éolienne.

26. Pièce selon la revendication 21 ou 22, **caractérisée en ce qu'**il s'agit d'une pièce pour l'aéronautique.

## Patentansprüche

1. Verfahren zur Herstellung eines mechanischen Teils aus einem thermoplastischen Verbundwerkstoff, **dadurch gekennzeichnet, dass** dieser thermoplastische Verbundwerkstoff aus einer Zusammensetzung für thermoplastische Verbundwerkstoffe mit Verstärkungsfasern und einer thermoplastischen Matrix zur Imprägnierung dieser Fasern hergestellt wird, wobei diese Matrix aus mindestens einem thermoplastischen Polymer besteht, das ein halbkristallines Polyamid-Polymer ist, das eine Glasübergangstemperatur Tg von mindestens 90°C aufweist, die über einen Dynamischen Differenzkalorimeter (DDK) nach einer zweiten Aufheizphase nach der Norm ISO 11357-2 mit einer Erwärmungs- und Abkühlungsgeschwindigkeit von 20°C/min gemessen wird, und das eine Schmelztemperatur Tf von weniger oder gleich 280°C aufweist, die über DDK nach einer ersten Aufheizphase nach der Norm ISO 11357-3 mit einer Erwärmungs- und Abkühlungsgeschwindigkeit von 20°C gemessen wird, und **dadurch gekennzeichnet, dass** diese Zusammensetzung neben diesen Verstärkungsfasern ebenfalls:
a) eine reaktive Zusammensetzung bestehend aus mindestens einem reaktiven Polyamid-Präpolymer umfasst, wobei diese Zusammensetzung eine Vorläufer-Zusammensetzung dieses Polyamid-Polymers dieser Matrix ist,
und
- **dadurch gekennzeichnet, dass** diese Zusammensetzung a) ein oder mehrere Polyamide umfasst, bei denen es sich um Präpolymere nach a) handelt, die unterschiedliche Amid-Einheiten A und B besitzen, die ausgewählt werden unter:
- A: einer mehrheitlich vorliegenden Amid-Einheit mit einem Stoffmengenanteil von 55 bis 95%, die unter den Einheiten x.T ausgewählt wird, wobei x ein C₉ bis C₁₈ linearaliphatisches Diamin und T eine Terephtalsäure ist,
- B: einer Amid-Einheit ungleich A, wobei diese Einheit B in einem Stoffmengenanteil von 5 bis 45% in Abhängigkeit der Tf des Polyamids basierend auf der Einheit A vorliegt und diese Amid-Einheit B unter den Einheiten x'.T ausgewählt wird, wobei x' ausgewählt wird unter:
∘ B1) einem verzweigten aliphatischen Diamin mit einer einzigen Methyl- oder Ethyl-Verzweigung (oder Verästelung) und mit einer Hauptkette, deren Länge sich durch mindestens zwei Kohlenstoffatome gegenüber der Länge der Hauptkette des Diamins x dieser zugewiesenen Einheit A unterscheidet, oder
∘ B2) m-Xylylendiamin (MXD) oder
∘ B3) einem C₄ bis C₁₈ linearaliphatischen Diamin, wenn in der Einheit A dieses Diamin x ein C₁₁ bis C₁₈ linearaliphatisches Diamin ist und x' ein C₉ bis C₁₈ Diamin ist, wenn in der Einheit A dieses Diamin x ein C₉ oder C₁₀ Diamin ist mit einem Unterschied von mindestens zwei Kohlenstoffatomen zwischen der Kette des Diamins x dieser Einheit A und der Kette des Diamins x' dieser Einheit B,
und unter der Bedingung, dass die Summe der Stoffmengenanteile von A + B gleich 100% ist,
und **dadurch gekennzeichnet, dass** dieses Verfahren mindestens eine Polymerisationsstufe mindestens einer reaktiven Zusammensetzung a), wie weiter oben definiert, umfasst.

2. Verfahren nach Anspruch 1, **dadurch gekennzeichnet, dass** diese Präpolymere nach a) neben diesen Amid-Einheiten A und B zusätzliche Amid-Einheiten C und D enthalten, die wie folgt definiert sind:
- C: Amid-Einheit ungleich A und B, ausgewählt unter Amid-Einheiten mit einer cycloaliphatischen und/oder aromatischen Struktur oder Einheiten mit x'T, wie weiter oben für B definiert, wobei jedoch x' ungleich x' der Einheit B ist, oder/und
- D: Amid-Einheit ungleich A, B und C, ausgewählt unter den alipathischen Amid-Einheiten, abgeleitet von:
i. Aminosäuren oder Lactamen mit C₆ bis C₁₂ bzw. deren Mischungen
ii. der Reaktion einer C₆ bis C₁₈ linearalphatischen Disäure und eines C₆ bis C₁₈ linearaliphatischen Diamins bzw. deren Mischungen,
und unter der Bedingung, dass die Summe der Stoffmengenanteile von A + B + C + D gleich 100 % ist.

3. Verfahren nach Anspruch 1 oder 2, **dadurch gekennzeichnet, dass** es folgende Phasen umfasst:
i) Imprägnierung im geschmolzenen Zustand der Verstärkungsfasern mit einer Zusammensetzung nach Anspruch 1, jedoch ohne diese Verstärkungsfasern zu enthalten, in einer offenen oder geschlossenen Form oder außerhalb der Form, um eine Zusammensetzung für Verbundwerkstoffe nach Anspruch 1 herzustellen,
ii) Polymerisationsreaktion im Falle einer reaktiven Polyamid-Zusammensetzung a) durch Erwärmen dieser Zusammensetzung der Phase i) mit Kettenverlängerung, je nach Fall, durch Polykondensations- oder Polyadditionsreaktion, in der Masse in geschmolzenem Zustand, mit, im Falle der Polykondensation, einer Vakuumabführung der Kondensationsprodukte mithilfe eines Vakuum-Extraktionssystems bei Einsatz einer geschlossenen Form, wobei andernfalls eine Polykondensation mit offener Form oder außerhalb der Form vorzunehmen ist,
iii) eine Herstellungsphase mittels Gießen oder eines anderen Herstellungssystems, die gleichzeitig mit der Polymerisationsphase ii) erfolgt.

4. Verfahren nach Anspruch 3, **dadurch gekennzeichnet, dass** diese Herstellung durch ein Harzinjektionsverfahren (RTM), Reaktionsinjektionsverfahren für strukturelle Anwendungen (S-RIM), Spritzdruckgießen, Strangziehen (Pultrusionsverfahren) oder Infusion im Falle einer reaktiven Zusammensetzung a) erfolgt.

5. Verfahren nach Anspruch 3 oder 4, **dadurch gekennzeichnet, dass** diese Herstellung durch ein Pultrusionsverfahren erfolgt.

6. Verfahren nach einem der vorstehenden Ansprüche 2 bis 5, **dadurch gekennzeichnet, dass** diese Amid-Einheit C die Einheit B teilweise ersetzt und in einem Stoffmengenanteil von bis zu 25 % im Verhältnis zu dieser Einheit B vorliegt.

7. Verfahren nach einem der vorstehenden Ansprüche 2 bis 6, **dadurch gekennzeichnet, dass** diese Einheit D die Einheit B teilweise ersetzt und in einem Stoffmengenanteil bis zu 70 % im Verhältnis zu dieser Einheit B vorliegt.

8. Verfahren nach einem der vorstehenden Ansprüche 1 bis 7, **dadurch gekennzeichnet, dass** die Differenz Tf-Tc zwischen der Schmelztemperatur Tf und der Kristallisationstemperatur Te dieses Matrixpolymers 50°C nicht überschreitet.

9. Verfahren nach einem der vorstehenden Ansprüche 1 bis 8, **dadurch gekennzeichnet, dass** die Kristallisationsenthalpie, die mittels Dynamischer Differenzkalorimetrie (DDK) nach der Norm ISO 11357-3 gemessen wird, über 40 J/g liegt.

10. Verfahren nach einem der vorstehenden Ansprüche 1 bis 9, **dadurch gekennzeichnet, dass** diese Amid-Einheit A in einem Stoffmengenanteil von 55 bis 80% im Verhältnis zur Gesamtheit der Einheiten dieses Polymers vorliegt.

11. Verfahren nach einem der vorstehenden Ansprüche 1 bis 10, **dadurch gekennzeichnet, dass** diese Einheit B x'T entspricht, wobei x' nach Option B1) ausgewählt wird und x' ein MPMD ist.

12. Verfahren nach einem der vorstehenden Ansprüche 1 bis 10, **dadurch gekennzeichnet, dass** diese Einheit B x'T entspricht, wobei x' nach Option B2) ausgewählt wird und x' ein MXD ist.

13. Verfahren nach einem der vorstehenden Ansprüche 1 bis 10, **dadurch gekennzeichnet, dass** diese Einheit B einem linearaliphatischen Diamin nach Option B3) entspricht.

14. Verfahren nach einem der vorstehenden Ansprüche 1 bis 13, **dadurch gekennzeichnet, dass** die Einheiten A und B wie folgt ausgewählt werden:
- Bei einer Einheit A gleich 9T wird diese Einheit B ausgewählt unter: 10T, 11T, 12T, 13T, 14T, 15T, 16T, 17T und 18T, MPMD.T und MXD.T mit einem Stoffmengenanteil von B zwischen 30 und 45%
- Bei einer Einheit A gleich 10T wird diese Einheit B ausgewählt unter: 9T, 11T, 12T, 13T, 14T, 15T, 16T, 17T und 18T, MPMD.T und MXD.T mit einem Stoffmengenanteil von B zwischen 25 und 45%
- Bei einer Einheit A gleich 11T wird diese Einheit B ausgewählt unter: 9T, 10T, 12T, 13T, 14T, 15T, 16T, 17T und 18T, MPMD.T und MXD.T mit einem Stoffmengenanteil von B zwischen 20 und 45%
- Bei einer Einheit A gleich 12T wird diese Einheit B ausgewählt unter: 9T, 10T, 11T, 13T, 14T, 15T, 16T, 17T und 18T, MPMD.T und MXD.T mit einem Stoffmengenanteil von B zwischen 20 und 45%.

15. Verfahren nach einem der vorstehenden Ansprüche 1 bis 14, **dadurch gekennzeichnet, dass** ein Teil der Einheit B, und zwar bis zu 70 % im Verhältnis zu B, durch eine Einheit C und/oder D nach Anspruch 2 ersetzt wird.

16. Verfahren nach einem der vorstehenden Ansprüche 1 bis 15, **dadurch gekennzeichnet, dass** diese Zusammensetzung a) mindestens ein reaktives Präpolymer aufweist oder umfasst, das auf derselben Kette Träger von zwei Endfunktionen X' und Y', jeweils untereinander durch Kondensation koreaktive Funktionen, ist, wobei X' und Y' Amin und Carboxy bzw. Carboxy und Amin entsprechen.

17. Verfahren nach einem der Ansprüche 1 bis 15, **dadurch gekennzeichnet, dass** diese reaktive Zusammensetzung a) mindestens zwei untereinander reaktive Polyamid-Präpolymere aufweist, die jeweils Träger von zwei identischen Endfunktionen X' oder Y' sind, wobei die Funktion X' eines Präpolymers lediglich mit dieser Funktion Y' des anderen Präpolymers mittels Kondensation reagieren kann.

18. Verfahren nach vorstehendem Anspruch 15, **dadurch gekennzeichnet, dass** diese Zusammensetzung a) oder Vorläufer-Zusammensetzung Folgendes umfasst:
a1) mindestens ein Präpolymer dieses thermoplastischen Polyamid-Polymers, Träger von n reaktiven Endfunktionen X, ausgewählt unter: -NH₂, -CO₂H und -OH, wobei n gleich 1 bis 3
a2) mindestens einen Kettenverlängerer Y-A'-Y, wobei A' ein Kohlenwasserstoff-Biradikal mit nicht-polymerer Struktur, Träger von 2 identischen reaktiven Endfunktionen Y, ist, die durch Polyaddition mit mindestens einer Funktion X dieses Präpolymers a1) reagieren.

19. Verfahren nach einem der vorstehenden Ansprüche 1 bis 18, **dadurch gekennzeichnet, dass** diese reaktiven Präpolymere dieser Zusammensetzung a) eine zahlenmittlere Molmasse Mn von 500 bis 10.000 aufweisen.

20. Verfahren nach einem der vorstehenden Ansprüche 1 bis 19, **dadurch gekennzeichnet, dass** eine Faserverstärkung mit langen Fasern vorliegt, die unter Glasfasern, Kohlenstofffasern, Keramikfasern, Aramidfasern bzw. deren Mischungen ausgewählt werden.

21. Mechanisches Teil oder Teil mit thermoplastischer Verbundwerkstoff-Struktur, **dadurch gekennzeichnet, dass** es durch ein Verfahren nach einem der vorstehenden Ansprüche 1 bis 20 hergestellt wird.

22. Mechanisches Teil nach Anspruch 21, **dadurch gekennzeichnet, dass** es durch ein Verfahren nach vorstehendem Anspruch 4 oder 5 hergestellt wird.

23. Mechanisches Teil nach Anspruch 21 oder 22, **dadurch gekennzeichnet, dass** es für Anwendungen in den Bereichen Automobilindustrie, Schienenverkehr, mariner und maritimer Sektor, Windkraft-, Photovoltaik- und Solaranlagen, einschließlich Solarpaneele und Bauteile für Solarkraftwerke, Sport, Luft- und Raumfahrt, Straßengüterverkehr über Lkws, Gebäude, Bauwesen, Schilder und Freizeit eingesetzt werden kann.

24. Strukturteil nach Anspruch 21 oder 22, **dadurch gekennzeichnet, dass** es sich um ein Kraftfahrzeugteil handelt, das durch Kathodische Tauchlackierung (KTL) nachbehandelt wird.

25. Teil nach Anspruch 21 oder 22, **dadurch gekennzeichnet, dass** es für Windkraftanlagen eingesetzt werden kann.

26. Teil nach Anspruch 21 oder 22, **dadurch gekennzeichnet, dass** es in der Luftfahrt eingesetzt werden kann.

## Claims

1. A method of manufacturing a mechanical part based on a thermoplastic composite material, **characterized in that** said thermoplastic composite material is obtained from a thermoplastic composite material composition comprising reinforcing fibres and a thermoplastic matrix impregnating said fibres, said matrix being based on at least one thermoplastic polymer which is a semi-crystalline polyamide polymer having a glass transition temperature Tg of at least 90°C, measured using a differential scanning calorimeter (DSC) after a second heat-up according to ISO 11357-2 with a heating and cooling rate of 20°C/min, and with a melting temperature Tf lower than or equal to 280°C, measured by DSC, after a first heating according to ISO 11357-3 with a heating and cooling rate of 20°C/min, and **in that** said composition, in addition to said reinforcing fibres comprises:
a) a reactive composition comprising at least one reactive polyamide pre polymer, said composition being a precursor composition of said polyamide polymer of said matrix,
and
- **in that** said composition a) comprises one or more polyamides which are prepolymers according to a), which comprise different A and B amide units selected as follows:
- A: is a majority amide unit present at a molar level ranging from 55 to 95%, selected from the x.T units, where x is a C₉ to C₁₈ linear aliphatic diamine and where T is terephthalic acid,
- B: is an amide unit different from A, said unit B is present at a molar level ranging from 5 to 45% as a function of the Tf of the polyamide based on unit A and said unit amide B is selected from units x'.T, where x' is selected from:
B1) a branched aliphatic diamine bearing a single methyl or ethyl branch (or connection) and having a main chain length different from at least two carbon atoms in relation to the main chain length of diamine x of said associated A unit, or
∘ B2) m-xylylene diamine (MXD), or
∘ B3) a C₄ to C₁₈ linear aliphatic diamine when in unit A, said diamine x is a C₁₁ to C₁₈ linear aliphatic diamine and x' is a C₉ to C₁₈ diamine when in unit A, said diamine x is a C₉ C₁₀ diamine with a difference of at least two carbon atoms between the diamine chain x of said unit A and the diamine chain x' of said unit B,
and provided that the sum of the molar levels of A + B is equal to 100%,
and **in that** the said process comprises at least one polymerization step of at least one reactive composition a) as defined above.

2. Process according to claim 1, **characterized in that** said pre polymers according to a) further comprise said amide units A and B, amide units C and D, defined as follows:
- C: amide unit other than A and B, selected from amide units based on a cycloaliphatic and/or aromatic structure or based on x'T as defined above for B but with x' different from x' for unit B,
or/and
- D: amide unit other than A, B and C, selected from aliphatic amide units from:
i. C₆ to C₁₂ amino acids or lactams or mixtures thereof
ii. the reaction of a C₆ to C₁₈ linear aliphatic diacid and a C₆ to C₁₈ linear aliphatic diamine or mixtures thereof,
and on condition that the sum of molar ratios A + B + C + D is equal to 100%.

3. Method according to claim 1 or 2, **characterized in that** it comprises the following steps:
i) melt impregnation of reinforcement fibres with a composition as defined in claim 1 but not including said reinforcement fibres in an open or closed mould or out of mould, in order to obtain a composition for composite material as defined in claim 1,
ii) polymerization reaction in the case of a reactive composition a) of polyamide, by heating said composition of step i) with chain extension, as appropriate, by poly-condensation reaction or by poly-addition reaction, in bulk molten state, with in the case of poly-condensation, a vacuum removal of the condensation products in the case of a closed mould, using a vacuum extraction system, otherwise the poly-condensation is carried out in open mould or out of the mould,
iii) an implementation step by moulding or by another implementation system and simultaneously with the polymerization step ii).

4. Method according to claim 3, **characterized in that** said implementation is carried out according to a RTM, S-RIM, injection-compression, pultrusion or infusion process in the case of a reactive composition a).

5. Method according to claim 3 or 4, **characterized in that** said implementation is carried out according to a pultrusion process.

6. Method according to one of Claims 2 to 5, **characterized in that** the said amide unit C is present and partially replaces B at a molar level of up to 25% in relation to the said unit B.

7. Method according to one of Claims 2 to 6, **characterized in that** the said unit D is present and partially replaces B at a molar level of up to 70% in relation to the said unit B.

8. Method according to one of Claims 1 to 7, **characterized in that** the Tf-Tc difference between the melting temperature Tf and the crystallization temperature Tc of said matrix polymer dis below 50°C.

9. Method according to one of Claims 1 to 8, **characterized in that** the crystallization enthalpy, measured in Differential Scanning Calorimetry (DSC) according to ISO Standard 11357-3, is greater than 40 J/g.

10. Method according to one of Claims 1 to 9, **characterized in that** the said amide unit A is present with a molar level ranging from 55 to 80% in relation to all the units of the said polymer.

11. Method according to one of claims 1 to 10, **characterized in that** said unit B corresponds to x'T with x' selected according to option B1) with x' being MPMD.

12. Method according to one of claims 1 to 10, **characterized in that** said unit B corresponds to x'T with x' selected according to option B2), with x' being MXD.

13. Method according to one of claims 1 to 10, **characterized in that** said unit B corresponds to a linear aliphatic diamine according to option B3).

14. Method according to one of Claims 1 to 13, **characterized in that** the units A and B are selected as follows:
- for unit A being 9T, said unit B is selected from: 10T, 11T, 12T, 13T, 14T, 15T, 16T, 17T and 18T, MPMD.T and MXD.T with a molar ratio of B ranging from 30 to 45%
- for unit A being 10T, said unit B is selected from: 9T, 11T, 12T, 13T, 14T, 15T, 16T, 17T and 18T, MPMD.T and MXD.T with a molar ratio of B ranging from 25 to 45%
- for unit A being 11T, said unit B is selected from: 9T, 10T, 12T, 13T, 14T, 15T, 16T, 17T and 18T, MPMD.T and MXD.T with a molar ratio of B ranging from 20 to 45%
- for unit A being 12T, said unit B is selected from: 9T, 10T, 11T, 13T, 14T, 15T, 16T, 17T and 18T, MPMD.T and MXD.T with a molar ratio of B ranging from 20 to 45%.

15. Method according to one of Claims 1 to 14, **characterized in that** part of unit B which is up to 70% in relation to B is replaced by a C and/or D unit as defined in Claim 2.

16. Method according to one of Claims 1 to 15, **characterized in that** the said composition a) comprises or consists of at least one reactive pre-polymer carrying on the same chain, two terminal functions X' and Y', respectively mutual co-reactive functions, by condensation, with X' and Y' being amine and carboxy or carboxy and amine respectively.

17. Method according to one of Claims 1 to 15, **characterized in that** the said reactive composition a) comprises at least two polyamide pre polymers which are mutually reactive and each carrying two identical terminal functions X' or Y' respectively, the said function X' of a pre polymer being capable of reacting only with said function Y' of the other pre-polymer condensation.

18. Method according to one of claims 15, **characterized in that** said composition a) or precursor composition, comprises:
a1) at least one pre-polymer of said thermoplastic polyamide polymer bearing n terminal reactive functions X, selected from: -NH₂, -CO₂H and -OH with n being 1 to 3
a2) at least one Y-A'-Y chain extender, with A' being a hydrocarbon bi radical, of non-polymeric structure, bearing 2 identical Y terminal reactive functional groups reactive by poly addition with at least one X function of said pre polymer a1).

19. Method according to one of Claims 1 to 18, **characterized in that** the said reactive pre-polymers of the said composition a) have a number-average molecular mass Mn ranging from 500 to 10,000.

20. Method according to one of Claims 1 to 19, **characterized in that** it comprises a fibrous reinforcement with long fibres selected from glass, carbon, ceramic, or aramid fibres or mixtures thereof.

21. Mechanical or thermoplastic composite material structure part, **characterized in that** it is obtained by a process as defined according to one of claims 1 to 20.

22. Mechanical part according to claim 21, **characterized in that** it is obtained by a process as defined according to claim 4 or 5.

23. Mechanical part according to claim 21 or 22, **characterized in that** it relates to applications in the auto mobile, rail, marine or maritime, wind, photovoltaic, or solar domain, including solar panels and solar power plant components, sports, aeronautics and space, truck transportation, building, civil engineering, panels and recreation.

24. Structural part according to claim 21 or 22, **characterized in that** it is an automotive part post-treated by cataphoresis.

25. Part according to claim 21 or 22, **characterized in that** it is a wind turbine part.

26. Part according to claim 21 or 22, **characterized in that** it is an aeronautics part.
